# EUROPÄISCHE PATENTSCHRIFT

(11) **EP 0 989 145 B1**
(45) Veröffentlichungstag und Bekanntmachung des Hinweises auf die Patenterteilung: **04.05.2005**
(21) Anmeldenummer: 99117475.6
(22) Anmeldetag: 10.09.1999
(51) Int. Cl.: C08G 18/08, C08G 18/66, C09D 175/04

(54) **Wässrige Polyurethan-Dispersionen mit reduziertem Gehalt an Triethylamin**
Aqueous polyurethane dispersions having a reduced content of triethylamine
Dispersions de polyurethanne aqueuses à teneur réduite en triéthylamine

(30) Priorität: 23.09.1998 DE 19843552
(43) Veröffentlichungstag der Anmeldung: 29.03.2000
(73) Patentinhaber: Bayer MaterialScience AG, 51368 Leverkusen (DE)
(72) Erfinder: Irle, Christoph, Dr., 47800 Krefeld (DE)

(56) Entgegenhaltungen:
- EP-A- 0 379 158
- DE-A- 3 209 781
- DE-A- 4 218 184
- US-A- 5 496 485

## Beschreibung

Die Erfindung betrifft wässrige Polyurethan-Dispersionen mit reduziertem Gehalt an Triethylamin, ein Verfahren zur Herstellung solcher Dispersionen und ihre Verwendung als Bindemittel für Beschichtungen.

Mit dem Ziel, die Emissionen organischer Lösemittel zu senken, werden zunehmend wässrige Beschichtungsmittel an Stelle lösemittelhaltiger Systeme eingesetzt. Diese wässrigen Systeme bestehen in der Regel aus Polymeren, wie sie in ähnlicher Form bereits für konventionelle Beschichtungen eingesetzt werden. Um diese Polymere wasserlöslich bzw. wasserdispergierbar zu machen, enthalten sie hydrophile Gruppen. Vorteilhaft ist, wenn diese hydrophilen Gruppen in das Polymer eingebaut sind ("interne Emulgatoren"), statt die Wasserdispergierbarkeit z.B. über einen zugesetzten (externen) Emulgator zu erreichen.

Bei den internen hydrophilen Gruppen handelt es sich meist um anionische Gruppen aus z.B. einer Carbonsäure und einer Base. So ist es bereits seit langem bekannt (z.B. US-A 3 412 054), Polyurethane durch Einbau von Hydroxy- und Carbonsäuregruppen enthaltenden Verbindungen wie Dimethylolpropionsäure und Neutralisation der Carbonsäuregruppen hydrophil zu modifizieren.

Als Neutralisationsmittel derartiger eingebauter hydrophilen Gruppen werden Basen eingesetzt, wie zum Beispiel Metallsalze wie Alkalimetallhydroxide oder Amine. Gegenüber Metallsalzen haben Amine den Vorteil, dass sie einen Lackfilm nach Applikation des Bindemittels verlassen (ausdampfen) und so die Hydrophilie des Films und damit die Wasserempfindlichkeit deutlich vermindert wird.

Primäre und sekundäre Amine haben jedoch den Nachteil, dass sie mit Isocyanaten reagieren.

Isocyanatgruppen enthaltende Bausteine werden für die Herstellung wässriger Dispersionen verwendet. Vor allem bei der Herstellung von Polyurethan-Dispersionen (siehe z.B. D. Dieterich, Prog. Org. Coatings **9**, 281 (1981), EP-A 220 000, EP-A 511 547, WO 98/05696) werden oft Zwischenstufen erhalten, die sowohl freie Isocyanatgruppen als auch Neutralisationsbasen enthalten.

Auch bei der Applikation wässriger 2K-Polyurethanlacke aus Polyisocyanat-Vernetzern und wässrigen Polyoldispersionen (siehe z.B. EP-A 358 979, EP-A 537 568, EP-A 542 105) kommen Neutralisationsmittel und Isocyanatgruppen aus dem Vernetzer in Kontakt.

Vor allem in diesen beiden Fällen werden vorteilhaft tertiäre, hydroxylgruppenfreie Amine als Neutralisationsmittel eingesetzt, da diese nicht mit Isocyanatgruppen reagieren. Wegen der leichten Verfügbarkeit wurde bislang vor allem Triethylamin als Neutralisationsamin eingesetzt.

Die Freisetzung des ätzenden Triethylamins aus wässrigen Lacken ist jedoch auch aus ökologischen Gründen weniger vorteilhaft. Daher sind sowohl Lackanwender als auch Lackhersteller bestrebt, den Anteil an Triethylamin in wässrigen Dispersionen zu reduzieren. Wünschenswert dabei ist, die Lackqualität nicht zu verschlechtern.

Als ungeeignet haben sich dabei folgende Alternativen herausgestellt:
Ammoniak reagiert rasch mit Isocyanatgruppen. Daneben zeigen Ammoniak-neutralisierte Bindemittel in pigmentierten Lacken eine deutlich schlechtere Pigmentbenetzung.
Primäre und sekundäre Amine reagieren ebenso mit Isocyanaten wie tertiäre, Hydroxylgruppen enthaltende Amine. Besonders letztere weisen darüber hinaus eine deutlich geringere Flüchtigkeit auf als Triethylamin, was sich in einer schlechteren Wasserfestigkeit in den ersten Tagen nach der Lackapplikation bemerkbar macht.
Tertiäre Amine mit längeren Alkylsubstituenten weisen gegenüber Triethylamin ebenfalls den Nachteil einer zu geringen Flüchtigkeit auf Die Erfahrung hat daneben gezeigt, dass mit längerkettigen tertiären Aminen neutralisierte Harze schlechter zu dispergieren sind als Triethylamin-neutralisierte.

Der Erfindung lag demnach die Aufgabe zugrunde, ein Amin zur Neutralisation für wässrige Dispersionen zu finden, das zumindest ein gleichwertiger Ersatz für das ökologisch weniger günstige Triethylamin ist, dabei jedoch nicht die Nachteile der bislang als Neutralisationsamin für wässrige Dispersionen bekannten Alternativen aufweist.

Überraschend wurde nun gefunden, dass diese Aufgabe gelöst werden kann durch Einsatz von N,N-Diisopropyl-N-ethylamin als Neutralisationsamin bei der Herstellung wässriger Polyurethan-Dispersionen.

Gegenstand der vorliegenden Erfindung sind somit wässrige Polyurethan-Dispersionen, enthaltend salzartige Gruppen, die 0,05 bis 5, bevorzugt 0,25 bis 2 Gew.-% (bezogen auf das Gesamtgewicht der wässrigen Dispersion) N,N-Diisopropyl-N-ethylamin in protonierter bzw. neutraler Form sowie 0 bis 1,5, bevorzugt 0 bis 0,9 Gew.-% weitere tertiäre Amine enthalten.

Wässrige Polyurethan-Dispersionen im Sinne der Erfindung können auch Mischungen aus Urethangruppen enthaltende Dispersionen sowie Polyacrylat-, Polyester-, Polyolefin- und/oder Polyepoxidharz-Dispersionen sein.

Ein weiterer Gegenstand der vorliegenden Erfindung ist ein Verfahren zur Herstellung der erfindungsgemäßen wässrigen Polyurethan-Dispersionen. Das Verfahren zur Herstellung der erfindungsgemäßen Polyurethan-Dispersionen ist dadurch gekennzeichnet, dass ein Säuregruppen enthaltendes Polyurethan-Präpolymer
A) mit N, N-Diisopropyl-N-ethylamin, gegebenenfalls in Mischung mit weiteren Aminen neutralisiert wird und anschließend
B) das neutralisierte Harz in Wasser dispergiert wird.

In einer besonders bevorzugten Ausführungsform werden Isocyanatgruppen enthaltende Präpolymere mit N,N-Diisopropyl-N-ethylamin ohne Zusatz weiterer Amine neutralisiert, anschließend in Wasser dispergiert und kettenverlängert, wie es z.B. in EP-A 220 000, EP-A 511 547 oder WO 98/05696 beschrieben ist.

Ein weiterer Gegenstand der Erfindung ist die Verwendung von N,N-Diisopropyl-N-ethylamin zur Neutralisation wässriger PUR-Dispersionen.

Ein weiterer Gegenstand der vorliegenden Erfindung ist die Verwendung der erfindungsgemäßen wässrigen Polyurethan-Dispersionen als Lackbindemittel. Eine bevorzugte Anwendungsform ist die Verwendung als Bindemittel in physikalisch trocknenden, durch Strahlung oder Luftsauerstoff vernetzenden einkomponentigen Beschichtungen. Eine besonders bevorzugte Anwendung ist die Verwendung als Polyolkomponente in wässrigen 2K-PUR-Lacken.

Erfindungsgemäß sind besonders bevorzugt Polyurethan-Dispersionen bestehend aus
A1) Polyisocyanaten,
A2) polymeren Polyolen mit mittleren Molgewichten von 400 bis 6 000,
A3) gegebenenfalls Monoalkoholen,
A4) Polyolen, Aminopolyolen oder Polyaminen mit einem Molgewicht unter 400,
A5) Mono-, Di- oder Polyolen bzw. Mono-, Di- oder Polyaminen, die eine salzartige Gruppe oder eine in eine salzartige Gruppe überführbare funktionelle Gruppe besitzen.

Geeignete Polyisocyanate A1) sind bevorzugt Diisocyanate der Formel R₁(NCO)₂ wobei R₁ einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, 4,4'-Diisocyanatodiphenylmethan, 2,4'-Diisocyanato-diphenylmethan, 2,4-Diisocyanatotoluol, 2,6-Diisocyanatotuol oder α,α,α',α'-Tetramethyl-m- oder p-xylylendiisocyanat sowie Mischungen der genannten Diisocyanate. Besonders bevorzugte Diisocyanate sind 1-Isocyanato-3,3,5-trimethyl-5-isocyanatomethylcyclohexan (Isophorondiisocyanat) und 4,4'-Diisocyanato-dicyclohexylmethan.

Weiterhin sind als Polyisocyanate A1) solche Polyisocyanate geeignet, die über Isocyanurat-, Biuret-, Uretdion- oder Carbodiimidgruppen verfügen. Derartige Polyisocyanate können hohe Funktionalitäten, z.B. von mehr als 3, aufweisen.

Die polymeren Polyole A2) in dem Molgewichtsbereich von 400 bis 6 000 sind die üblichen wie sie für Polyurethane bereits seit langem eingesetzt werden, mit einer OH-Funktionalität von mindestens 1,8 bis ca. 4 wie zum Beispiel Polyester, Polyether, Polycarbonate, Polyestercarbonate, Polyacetale, Polyolefine und Polysiloxane geeignet. Bevorzugt verwendet werden Polyole in einem Molgewicht von 600 bis 2 500 mit einer OH-Funktionalität von 2 bis 3. Diese polymeren Polyole A2) können auch ethylenisch ungesättigte Einheiten enthalten.

Neben dem Einsatz difunktioneller OH-Komponenten kommt, wie aus der Literatur bekannt, auch die Terminierung des Polyurethan-Präpolymers mit einem monofunktionellen Alkohol A3) in Betracht. Geeignete Monoalkohole umfassen auch solche mit polymerisierbaren funktionellen Gruppen (z.B. OH-Gruppen tragende (Meth)acrylsäureester). Weiterhin geeignet sind z.B. Ethanol, i-Propanol, n-Propanol, n-Butanol, n-Pentanol sowie gesättigte oder ungesättigte Fettalkohole.

Polyole, Aminopolyole oder Polyamine A4) mit einem Molgewicht unter 400, die als Kettenverlängerer in Polyurethanen bzw. Polyurethan-Dispersionen Verwendung finden können, sind in der entsprechenden Literatur ebenfalls in großer Zahl beschrieben. Als Beispiel seien genannt: Ethandiol, Butandiol-1,4, Cyclohexandimethanol, Trimethylolpropan, Glycerin sowie Ethylendiamin, 1,4-Diaminobutan, Isophorondiamin und 4,4-Diaminodicyclohexylmethan.

Als Komponente A5) werden niedermolekulare Polyole, die zur Ausbildung einer ionischen Gruppe befähigt sind, sind z.B. Dimethylolpropionsäure, Hydroxypivalinsäure oder Hydroxyethylsulfonsäure eingesetzt. Niedermolekulare Amine, die zur Ausbildung einer ionischen Gruppe befähigt sind, sind z.B. Taurin oder Additionsprodukte aus (Meth)Acrylsäure und Polyaminen eingesetzt.

Neben Polyolen bzw. Polyaminen können als Komponente A5) auch Polyoxyalkylenether die pro Molekül mindestens eine OH-Gruppe tragen und z.B. aus einem Alkohol und aus Ethylenoxid/Propylenoxid bestehen mit einem Molgewicht von 250 bis etwa 3 000 in das Polyurethan eingebaut werden. Es ist bekannt, dass die Substanzen Hydrophilieträger sind und die Dispergierung des PUR in Wasser verbessern.

Die Herstellung der Polyurethan-Dispersionen erfolgt in der bekannten üblichen Art: Man läßt die Polyisocyanatkomponente mit polymerem Polyol und niedermolekularen Kettenverlängerem zu einem Polyurethan ausreagieren, wobei gegebenenfalls und vorteilhaft ein Lösungsmittel mitverwendet wird, das später gegebenenfalls wieder abgetrennt werden kann.

In einem weiteren Schritt werden anschließend zur Neutralisation befähigte Gruppen mit N,N-Diisopropyl-N-ethylamin im molaren Verhältnis von z.B. 1:0,5 bis 1:2 umgesetzt. Auf diese Weise werden Säuregruppen in die Salzform überführt. Anschließend wird mit Wasser die Dispersion erzeugt.

In einer besonders bevorzugten Durchführung des Verfahrens sind zum Zeitpunkt der Dispergierung noch restliche (überschüssige) NCO-Gruppen vorhanden. Diese werden nach bzw. während des Dispergierschrittes kettenverlängert. Hierzu reagieren die NCO-Gruppen mit der Dispersion zugegebenen Kettenverlängerern (z.B. Polyaminen) oder mit Wasser. Bei Mitverwendung eines leichtsiedenden Lösemittels kann dieses durch Destillation wieder abgetrennt und/oder zurückgewonnen werden.

Je nach Neutralisationsgrad kann die Dispersion sehr feinteilig eingestellt werden, so dass sie praktisch das Aussehen einer Lösung hat. Aber auch sehr grobteilige Einstellungen sind möglich, die ebenfalls ausreichend stabil sind. Auch der Feststoffgehalt kann in weiten Grenzen von z.B. 20 bis 50 Gew.-% variiert werden.

Die so hergestellten erfindungsgemäßen Polyurethan-Dispersionen können in einem weiteren Schritt durch eine Acrylat-Polymerisation modifiziert werden, wie es z.B. aus der DE-A 1 953 348 oder DE-A 1 953 349 bereits seit langem bekannt ist.

Die Neutralisation kann durch Umsetzung von Säuregruppen mit reinem N,N-Diisopropyl-N-ethylamin oder aber mit Mischungen aus N,N-Diisopropyl-N-ethylamin und weiteren Aminen erfolgen. Auch die Neutralisation mit einer Mischung aus N,N-Diisopropyl-N-ethylamin und Triethylamin ist Teil des erfindungsgemäßen Verfahrens, da auf diese Weise die Umweltfreundlichkeit im Vergleich zu einer mit reinem TEA neutralisierten Dispersion ebenfalls verbessert wird.

Die Verwendung der erfindungsgemäßen Polyurethan-Dispersionen erfolgt als Bindemittel in Beschichtungen, die physikalisch trocknen oder durch radikalische Polymerisation von C=C-Doppelbindungen vernetzen. Eine bevorzugte Verwendung ist die Kombination mit Polyisocyanaten, wie sie z.B. aus der EP-A 540 985 bekannt sind.

### Beispiel

### Beispiel 1

### Polyurethan-Dispersion 1

377,7 g eines Polyesters aus Adipinsäure, Hexandiol und Neopentylglykol (Hydroxylzahl 112 mg KOH/g), 27,2 g Neopentylglykol, 38,3 g Dimethylolpropionsäure und 223,6 g N-Methylpyrrolidon werden auf 70°C aufgeheizt und gerührt, bis sich eine klare Lösung gebildet hat. Nun werden 380,6 g 4,4'-Diisocyanato-dicyclohexylmethan (Desmodur® W, Bayer AG) zugegeben. Es tritt eine exotherme Reaktion ein. Der Ansatz wird bei 100°C so lange gehalten, bis der NCO-Gehalt 4,4 Gew.-% beträgt. Nun wird auf 50°C abgekühlt und 37,0 g N,N-Diisopropyl-N-ethylamin zugegeben. nun wird durch 10-minutiges Rühren homogenisiert. Dann werden 850,0 g der neutralisierten Harzlösung unter Rühren in 1 000,0 g 40°C warmem Wasser unter Rühren dispergiert. Es wird noch weitere 5 min gerührt, dann wird eine Lösung von 10,6 g Ethylendiamin und 12,1 g Diethylentriamin in 110,9 g Wasser innerhalb von 20 min zugegeben. Das Produkt ist eine feinteilige Polyurethan-Dispersion mit einer mittleren Teilchengröße von 48 nm (bestimmt durch Laserkorrelationsspektroskopie), einem Festgehalt von 35,5 % und einem pH-Wert von 8,3.

### Beispiel 2

### Polyurethan-Dispersion 2, Vergleich

Die Herstellung erfolgt gemäß Beispiel 1. Zur Neutralisation werden anstelle des N,N-Diisopropyl-N-ethylamins 28,9 g Triethylamin eingesetzt. Das Produkt ist eine feinteilige Polyurethan-Dispersion mit einer mittleren Teilchengröße von 54 nm (bestimmt durch Laserkorrelationsspektroskopie), einem Festgehalt von 36,2 % und einem ph-Wert von 8,0.

### Beispiel 3

### Polyurethan-Dispersion 3, Vergleich

Die Herstellung erfolgt gemäß Beispiel 1. Zur Neutralisation werden anstelle des N,N-Diisopropyl-N-ethylamins 28,9 g N-Methylmorpholin eingesetzt. Das Produkt ist eine milchige Polyurethan-Dispersion mit groben Ausfällungen.

### Beispiel 4

### Formulierung von Klarlacken aus den Polyurethan-Dispersionen 1 und 2

Zur Formulierung eines Klarlackes fügt man zu 100 Gew.-Teilen der Dispersionen 1 und 2 jeweils folgende Rezepturbestandteile:

| | |
|---|---|
| Colöser | N-Methylpyrrolidon (2 Gew.-Teile), Butylglykol-Wasser 1: 1 (10 Gew.-Teile) |
| Entschäumer | Tego Foamex®805 (Tego-Chemie) Lieferform (0,2 Gew.-Teile) |
| Additiv zur Verbesserung der Untergrundbenetzung | Byk®346, Lieferform (0,5 Gew.-Teile) (Byk-Chemie) |
| Verdicker | Acrysol®RM8, 5 %ig in Wasser (Rohm und Haas) (1,0 Gew.-Teile) |

Zur Bestimmung der Filmhärte (Pendeldämpfung nach DIN 53 157) werden die Lacke mit einer Naßfilm-Schichtstärke von 200 pm auf Glasplatten appliziert. Zur Bestimmung der Beständigkeiten gegen Wasser und Ethanol (50 %ige wässrige Lösung) werden die Klarlacke in 3 Schichten (jeweils 100 g Lack/m²) auf Eichenholzplatten appliziert, anschließend wird jeweils bei Raumtemperatur getrocknet. Vor Applikation der 2. und 3. Schicht wird die Lackoberfläche leicht angeschliffen. Beständigkeiten bestimmt man nach folgender Methode: Mit dem Lösemittel getränkte Wattebäusche werden auf 7 Tage alte Lackfilme aufgelegt und mit Petrischalen abgedeckt. Nach Einwirkzeiten von 24 Stunden (Wasser) bzw. 30 Minuten (Ethanol) erfolgt die Beurteilung, nachdem die benetzten Filme mit Haushaltspapier vorsichtig getrocknet worden sind. Beurteilt werden Beschädigungen in einer Skala von 0 (keine Veränderung) bis 5 (starke Beschädigung, Film aufgelöst).

| Prüfergebnisse: | | | | | |
|---|---|---|---|---|---|
| **Polyurethan- Disperson** | **Filmhärte** | | | **Beständigkeiten** | |
| | nach 3 h | nach 1 d | nach 7 d +1 d 50°C | Wasser | Ethanol |
| **1** | 24" | 80" | 108" | 1 | 4 |
| **2** | 25" | 78" | 112" | 0-1 | 4 |

### Beispiel 5

### Strahlenhärtende Polyurethan-Dispersion

Es werden 230,4 g Polyetheracrylat (Trimethylolpropan gestarteter, im Mittel vierfach ethoxilierter Polyether, der pro Mol Polyether mit einem Mol Acrylsäure verestert wurde, Hydroxylzahl 156 mg KOH/g) 136,0 g eines Polyesters aus Adipinsäure, Hexandiol und Neopentylglykol, Hydroxylzahl 66 mg KOH/g), 21,4 g Dimethylolpropionsäure und 0,3 g Dibutylzinndilaurat in 211,3 g Aceton gelöst. Unter Rühren wird eine Mischung von 102,1 g Isophorondiisocyanat und 50,4 g Hexamethylendiisocyanat zugetropft, so dass die Temperatur über 50°C liegt und 65°C nicht übersteigt. Sobald der Isocyanatgehalt auf 3,6 % gefallen ist, wird auf 40°C abgekühlt und eine Mischung von 9,3 g Triethylamin und 9,0 g Diisopropylethylamin zugegeben. Nach weiteren 5 min wird der Ansatz unter intensivem Rühren in 1177 g Wasser überführt. Anschließend werden innerhalb von 10 min 20,6 g Ethylendiamin gelöst in 61,6 g Wasser zugetropft. Nach 30 min Rühren wird Aceton im Vakuum abdestilliert.

Die entstandene Dispersion hat einen Festgehalt von 35,2 %, eine Viskosität von 30 mPa s bei 23°C und einen pH-Wert von 8,4.

### Beispiel 6

### Oxidativ trocknende Polyester-Polyurethan-Dispersion 1

In einem 4 l-Reaktionsgefäß mit Rühr-, Kühl- und Heizvorrichtung legt man 2 257,5 g eines Polyesters aus 0,57 mol Phthalsäureanhydrid, 1,71 mol Isophthalsäure, 2,85 mol Sojaölfettsäure, 1,14 mol Erdnußölfettsäure, 2,85 mol Benzoesäure und 4,56 mol Pentaerythrit, der eine Säurezahl von 3 mg KOH/g und eine OH-Zahl von 170 mg KOH/aufweist, 175,5 g Dimethylolpropionsäure, 225,8 g N-Methylpyrrolidon und 3,0 g Dibutylzinnoxid vor und homogenisiert die Mischung 30 min bei 140°C. Nach Abkühlen auf 130°C gibt man 114 g Isophorondiisocyanat zu, rührt 1 Stunde bei 130°C nach, kühlt auf 80°C und gibt nochmals 453 g Isophorondiisocyanat zu. Anschließend rührt man bei 120 bis 130°C so lange, bis keine NCO-Gruppen mehr nachgewiesen werden können. Nun gibt man 217 g Butylglykol, 29,3 g ethoxyliertes Nonylphenol und 23,7 g Cobaltoctoat zu und homogenisiert. Man erhält eine 87 %ige Harzschmelze eines wasserverdünnbaren Alkydharzes, welches eine Säurezahl von ca. 27 und noch freie Hydroxylgruppen enthält. Bei ca. 95°C gibt man 105 g N,N-Diisopropyl-N-ethylamin und homogenisiert ca. 30 min; anschließend dispergiert man mit 3 160 g destilliertem Wasser. Nach ca. 2 Stunden Nachrühren bei 50 bis 60°C gibt man 22 g Hautverhingerungsmittel Ascinin® R conz. (Bayer) zu und filtriert. Man erhält ein wässriges Alkydharz mit einer mittleren Teilchengröße von 83 nm (bestimmt durch Laserkorrelationsspektroskopie), einem Festgehalt von 44 % und einem pH-Wert von 6,8.

### Beispiel 7

### Oxidativ trocknende Polyester-Polyurethan-Dispersion 2, Vergleich

Man verfährt wie in Beispiel 6, gibt aber statt des N,N-Diisopropylethylamins 76 g Triethylamin zu. Man erhält ein wässriges Alkydharz mit einer mittleren Teilchengröße von 102 nm (bestimmt durch Laserkorrelationsspektroskopie), einem Festgehalt von 44 % und einem pH-Wert von 6,8.

## Patentansprüche

1. Wässrige Polyurethan-Dispersion, enthaltend salzartige Gruppen, die 0,05 bis 5 % (bezogen auf das Gesamtgewicht der wässrigen Dispersion) N,N-Diisopropyl-N-ethylamin in protonierter bzw. neutraler Form sowie 0 bis 1,5 % weitere tertiäre Amine enthalten.

2. Wässrige Polyurethan-Dispersion nach Anspruch 1, enthaltend salzartige Gruppen, die 0,25 bis 2 % (bezogen auf das Gesamtgewicht der wässrigen Dispersion) N,N-Diisopropyl-N-ethylamin in protonierter bzw. neutraler Form sowie 0 bis 0,9 % weitere tertiäre Amine enthalten.

3. Wässrige Polyurethan-Dispersion nach Anspruch 1, enthaltend salzartige Gruppen, die 0,4 bis 1,5 % (bezogen auf das Gesamtgewicht der wässrigen Dispersion) N,N-Diisopropyl-N-ethylamin in protonierter bzw. neutraler Form sowie 0 bis 0,9 % weitere tertiäre Amine enthalten.

4. Wässrige Polyurethan-Dispersionen gemäß Anspruch 1, **dadurch gekennzeichnet, dass** die Dispersion eine Mischung aus Urethangruppen enthaltende Dispersionen sowie Polyacrylat-, Polyester-, Polyolefin- und/oder Polyepoxidharz-Dispersionen ist.

5. Verfahren zur Herstellung einer Polyurethan-Dispersion gemäß Anspruch 1, **dadurch gekennzeichnet, dass** ein Säuregruppen enthaltendes Polyurethan-Präpolymer
A) mit N,N-Diisopropyl-N-ethylamin gegebenenfalls mit weiteren Aminen neutralisiert wird und anschließend
B) das neutralisierter Harz in Wasser dispergiert wird.

6. Verwendung der Polyurethan-Dispersion gemäß Anspruch 1 als Bindemittel für Lacke und Beschichtungen.

7. Verwendung der Polyurethan-Dispersion gemäß Anspruch 1 als Polyolkomponente in wässrigen 2K-Polyurethan-Beschichtungen.

8. Verwendung von N,N-diisopropyl-N-ethylamin zur Neutralisation wässriger PUR-Dispersionen.

## Claims

1. Aqueous polyurethane dispersion comprising salt-type groups which contain 0.05% to 5% (based on the total weight of the aqueous dispersion) of N,N-diisopropyl-N-ethylamine in protonated or neutral form and 0% to 1.5% of further tertiary amines.

2. Aqueous polyurethane dispersion according to Claim 1, comprising salt-type groups which contain 0.25% to 2% (based on the total weight of the aqueous dispersion) of N,N-diisopropyl-N-ethylamine in protonated or neutral form and 0% to 0.9% of further tertiary amines.

3. Aqueous polyurethane dispersion according to Claim 1, comprising salt-type groups which contain 0.4% to 1.5% (based on the total weight of the aqueous dispersion) of N,N-diisopropyl-N-ethylamine in protonated or neutral form and 0% to 0.9% of further tertiary amines.

4. Aqueous polyurethane dispersion according to Claim 1, **characterized in that** the dispersion is a mixture of dispersions containing urethane groups and of polyacrylate dispersions, polyester dispersions, polyolefin dispersions and/or polyepoxy resin dispersions.

5. Process for preparing a polyurethane dispersion according to Claim 1, **characterized in that** a polyurethane prepolymer containing acid groups
A) is neutralized with N,N-diisopropyl-N-ethylamine, optionally with further amines, and subsequently
B) the neutralized resin is dispersed in water.

6. Use of the polyurethane dispersion according to Claim 1 as binder for paints and coatings.

7. Use of the polyurethane dispersion according to Claim 1 as polyol component in aqueous 2K (two-component) polyurethane coatings.

8. Use of N,N-diisopropyl-N-ethylamine for neutralizing aqueous PU dispersions.

## Revendications

1. Dispersion aqueuse de polyuréthanne contenant des groupes salins et 0,05 à 5 % (du poids total de la dispersion aqueuse) de N,N-diisopropyl-N-éthylamine à l'état protonisé ou neutre, et 0 à 1,5 % d'autres amines tertiaires.

2. Dispersion aqueuse de polyuréthanne selon la revendication 1, contenant des groupes salins, et 0,25 à 2 % (sur le poids total de la dispersion aqueuse) de N,N-diisopropyl-N-éthylamine à l'état protonisé ou neutre, et 0 à 0,9 % d'autres amines tertiaires.

3. Dispersion aqueuse de polyuréthanne selon la revendication 1, contenant des groupes salins, et 0,4 à 1,5 % (sur le poids total de la dispersion aqueuse) de N,N-diisopropyl-N-éthylamine à l'état protonisé ou neutre, et 0 à 0,9 % d'autres amines tertiaires.

4. Dispersion aqueuse de polyuréthanne selon la revendication 1, **caractérisée en ce qu'**elle consiste en un mélange de dispersions contenant des groupes uréthanne et de dispersions de polyacrylates, polyesters, polyoléfines et/ou résines polyépoxydiques.

5. Procédé pour la préparation d'une dispersion de polyuréthanne selon la revendication 1, **caractérisé en ce que**, partant d'un prépolymère de polyuréthanne qui contient des groupes acides,
A) on le neutralise par la N,N-diisopropyl-N-éthylamine et le cas échéant avec d'autres amines puis
B) on disperse la résine neutralisée dans l'eau.

6. Utilisation de la dispersion de polyuréthanne selon la revendication 1 en tant que liant pour des vernis et produits de revêtement.

7. Utilisation de la dispersion de polyuréthanne selon la revendication 1 en tant que composant polyol dans des produits de revêtement aqueux à deux composants à base de polyuréthannes.

8. Utilisation de la N,N-diisopropyl-N-éthylamine pour la neutralisation de dispersions aqueuses de polyuréthannes.
